# EUROPEAN PATENT APPLICATION

(11) **EP 3 508 467 A1**
(43) Date of publication of application: **10.07.2019**
(21) Application number: 16914557.0
(22) Date of filing: 31.08.2016
(51) Int. Cl.: C05D 9/00, A01C 21/00, C09K 17/00

(54) **CARBON-BASED FUNCTIONAL MATERIAL AND APPLICATIONS**

(71) Applicant: Beijing Xinna International New Materials Technology Co., Ltd., Beijing 100176 (CN)
(72) Inventor: GUO, Zhijiang, Beijing 100176 (CN); JIN, Gong, Beijing 100176 (CN); TU, Jiangping, Beijing 100176 (CN); WANG, Xiuli, Beijing 100176 (CN); CI, Lijie, Beijing 100176 (CN)
(74) Representative: Atkinson & Company Intellectual Property Limited
(86) International application number: PCT/CN2016/097582
(87) International publication number: WO 2018/039991

(57) **Abstract**

Provided is a carbon-based functional material (simply as FCN or FCN material) and applications thereof. The carbon-based functional material consists of three elements, namely carbon, nitrogen, and oxygen, having sp2 carbons as the backbone and functional groups R formed on the surface and/or periphery of a carbon backbone substrate, the R functional groups being a combination of groups such as a hydroxyl, carboxyl, ether bond, epoxy, carbonyl, aldehyde, ester, and alkyl. The carbon-based functional material can have interactive effects with plants, microorganisms, and soil environments, provides the function of inducing or regulating biosynthesis and metabolic pathways, also can serve as a carrier for an organically catalyzed synthesis and an intermediate material for biosynthesis, and be prepared as a plant enzyme activating agent and catalyst, a chemical fertilizer additive, a microorganism culturing composition, a soil conditioner, and is broadly applicable in the fields of agricultural production and the environment.

## Description

### TECHNICAL FIELD

The present invention belongs to the technical field of new materials, and particularly relates to a novel carbon-based functional material and an application of the material in agriculture and environment.

### BACKGROUND

It is considered that organisms and the biosphere on the Earth actually refer to the cycle of the three elements of C, H and O from inorganic to organic, which is driven by energy. Therefore, the synthesis and metabolism of the organisms and living environment thereof may be influenced and induced by specifically synthesizing inorganic matters into organic carbon skeletons.

Inorganic CO₂ and H₂O realize two functions under plant photosynthesis, wherein one is to synthesize an organic carbon skeleton in the form of (CH₂O), and the other is to store energy. Taking an energy-storing (CH₂O) basic carbon skeleton as a raw material, a plant can use energy and absorbed mineral elements to enrich the form of the carbon skeleton. Taking plant C₃ synthesis as an example, six inorganic CO₂ can form a carbon skeleton in the form of (CH₂O)₆ under six C₃ cycles. To complete this process, it is necessary to synthesize a carbon skeleton in the form of C₅H₁₂O₁₁P₂ to participate in catalysis; and meanwhile, intermediates such as C₃H₇O₇ and C₃H₇O₆P can be produced.

At present, documents or patents for inducing biosynthetic metabolism by converting inorganic matters into organic matters have not been retrieved.

### SUMMARY

An object of the present invention is to provide a novel carbon-based functional material and an application of the carbon-based functional material in agriculture and environment by referring to the theory of biosynthesis and metabolism.

The present invention is implemented by the following technical solutions.

According to a first embodiment of the invention, a carbon-based functional material consists of three elements: carbon, hydrogen and oxygen; and a structure of the carbon-based functional material is composed of *sp²* carbons as a skeleton, and an R functional group is formed on a surface and/or at an edge of a base of the carbon skeleton.

The size of the carbon skeleton is 1-100 nm.

The R functional group comprises one or a combination of at least two of a hydroxyl group, a carboxyl group, an ether bond, an epoxy group, a carbonyl group, an aldehyde group, an ester group, and an alkyl group.

Preferably, the proportion of the three elements of carbon, hydrogen and oxygen are: 40-75 wt% of carbon, 1-4 wt% of hydrogen and 21-59 wt% of oxygen.

Preferably, the carbon-based functional material has a hydrophilic property, and forms a uniform carbon-based functional material hydrosol with water.

Preferably, the carbon-based functional material hydrosol has a pH value in a range of 2-4 and conductivity greater than 1.5 ms/cm.

Preferably, a raw material for preparing the carbon-based functional material is inorganic, and the carbon-based functional material is formed by a single step under a simulated natural environmental condition; and the combination of the R functional group changes along with the change of natural condition.

An application of a carbon-based functional material may comprise any of the above carbon-based functional material; and the carbon-based functional material is used in the agricultural field or the environmental field, interacts with plants, microorganisms and soil environment, and has a function of inducing or regulating biosynthesis and metabolic pathway.

Preferably, the agricultural field comprises field crops and cash crops.

Preferably, the field crops at least comprise rice, corn, wheat, and potatoes.

Preferably, the cash crops at least comprise tobacco, vegetables, flowers, and fruit trees.

Preferably, the application of the carbon-based functional material in the agriculture field at least comprises: directly applying the carbon-based functional material to soil, or adding the carbon-based functional material to a fertilizer and then applying the fertilizer to the soil through flushing, drip irrigation or sprinkling irrigation.

The present invention has the following advantageous effects.

The carbon-based functional material provided by the present invention adopts *sp²* carbons as a skeleton to form a base, and is synthesized by a single step under an artificially simulated natural environmental condition to have an inducing, regulating or catalytic effect; and the R functional group combination changes along with the change of the natural condition.

The carbon-based functional material provided by the present invention adopts the carbon, hydrogen and oxygen elements having the same objects as plants, microorganisms and soil, and meanwhile, can induce plant anabolism, provide a microbial carbon source, and regulate the distribution of a carbon sink and nutrients in the vertical or horizontal direction in the soil environment, thereby showing a superimposing magnification function.

The application of the carbon-based functional material provided by the present invention is simple, flexible, convenient and diversified. The carbon-based functional material can be directly applied to existing agricultural technologies without additional labor. In the practical application, the FCN can be added to a fertilizer or flushed into the soil with irrigation water, and can also be mixed with water and fertilizer for drip irrigation or sprinkling irrigation. The FCN is simple and flexible in use, and can meet not only the requirements of factories on development of FCN-based fertilizers, plant growth promoters, soil conditioners, bio-fertilizer synergists and the like, but also the diverse requirements of farmers on independent operations, and can be directly grafted into the existing agricultural technologies.

### BRIEF DESCRIPTION OF THE DRAWINGS

Figure 1 is a TEM image of an FCN material;
Figure 2 is an infrared spectroscopy analysis graph of the FCN;
Figure 3A is a carbon element analysis graph of the FCN in an X-ray photoelectron spectroscopy;
Figure 3B is an oxygen element analysis graph of the FCN in the X-ray photoelectron spectroscopy;
Figure 4 is a thermogravimetric and functional group analysis graph of the FCN;
Figure 5 is a table of pH values and conductivities of the FCN;
Figure 6 is a comparison image of an application effect of the FCN in Arabidopsis;
Figure 7A is a comparison image of an application effect of the FCN in rice;
Figure 7B is a chart of different test sites of the FCN;
Figure 8 is a comparison image of an application effect of the FCN in tobacco; and
Figure 9 is a simplified structural formula of the FCN material.

### DETAILED DESCRIPTION

The following embodiments are employed to illustrate the technical solutions of the present invention. These embodiments are merely illustrative, are only intended to describe and explain the technical solutions of the present invention, and should not be construed as limiting the technical solutions of the present invention.

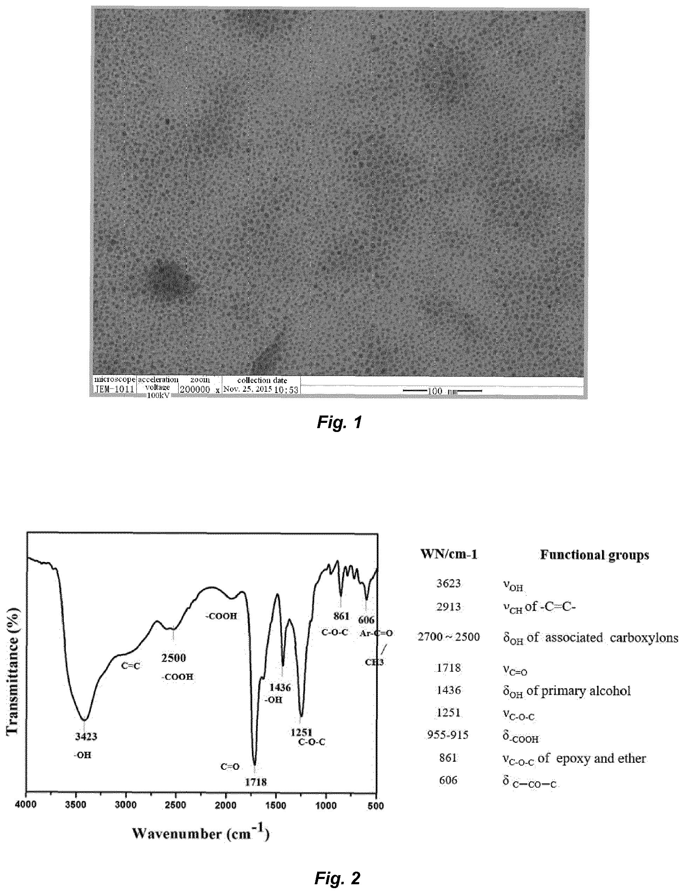

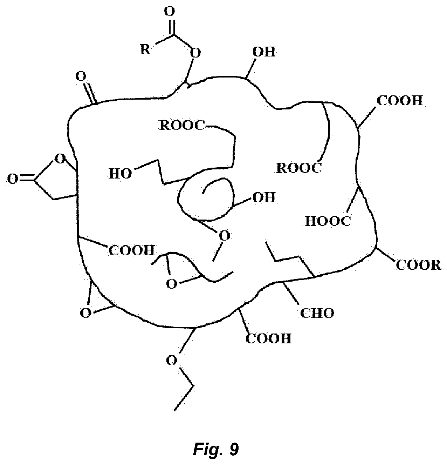

The present invention provides a carbon-based functional material (function carbon Nano, FCN for short). As shown in Figs. 1 -9, the novel carbon-based functional material consists of three elements, namely carbon, hydrogen, and oxygen. A structure of the carbon-based functional material is composed of *sp²* carbons as a skeleton and an R functional group is formed on the surface and/or at the edge of a carbon skeleton base. The R functional group comprises a hydroxyl group, a carboxyl group, an ether bond, an epoxy group, a carbonyl group, an aldehyde group, an ester group, and an alkyl group (such as a combination of at least one of a methyl group, an ethyl group, an aryl group and an ethylene group).

The proportion of the three elements of carbon, hydrogen and oxygen are: 40-75 wt% of carbon, 1-4 wt% of hydrogen and 21-59 wt% of oxygen.

In the present invention, the carbon-based functional material has a hydrophilic property, and forms a uniform carbon-based functional material hydrosol with water.

The carbon-based functional material hydrosol has a pH value in the range of 2-4 and conductivity greater than 1.5 ms/cm.

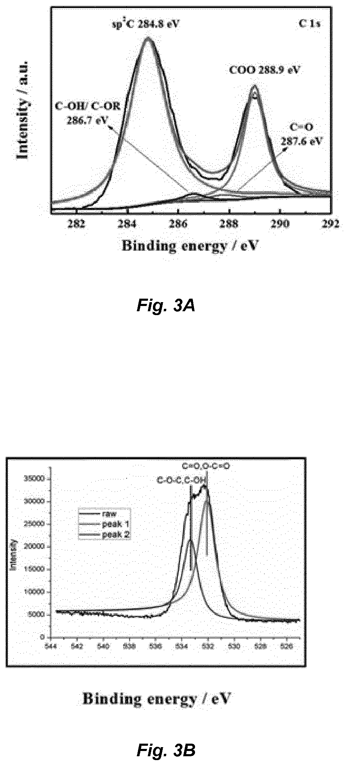

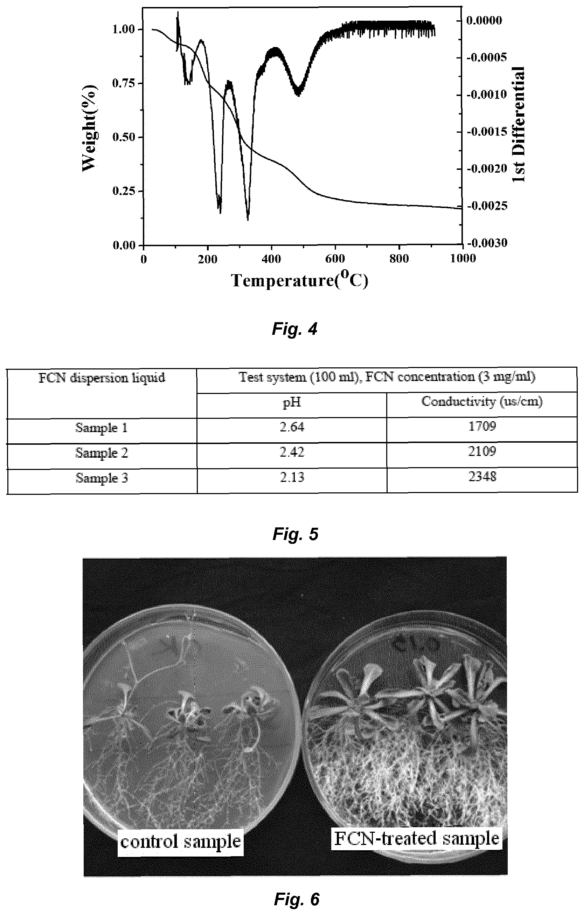

The carbon-based functional material provided by the present invention is granular (as shown in Figure 1). Through the infrared spectroscopy (FTIR) and the X-ray photoelectron spectroscopy (XPS) analysis of the carbon-based functional material, it can be found that the surface of the carbon-based functional material is abundant in functional groups. It can be seen from the infrared spectroscopy analysis graph (as shown in Figure 2) that combinations of a hydroxyl group, a carboxyl group, an ether bond, an epoxy group, a carbonyl group, an aldehyde group, an ester group, an alkyl group, and the like are located on the carbon skeleton of the carbon-based functional material. In the X-ray photoelectron spectroscopy (as shown in Figure 3), from the carbon peak separation results, it is speculated that the surface of a sample may have a hydroxyl group from the fact that 288.9 ev is used as a binding energy of carbon and the hydroxyl group, and it is speculated that the surface of the sample may have a carboxyl group from the fact that 287.6 ev is used as a binding energy of carbon and the carboxyl group. From the oxygen peak separation results, 533.2 ev is a binding energy of C-O-C, CO-OH or C-OH in functional groups. Thermal decomposition of the carbon-based functional materials comprises three steps (as shown in Figure 4): removing water when temperature is below 100 °C; breaking an oxygen-containing functional group of the material between when temperature is 100 °C and 700 °C; and calcining the carbon skeleton of the material when temperature is above 700 °C, 200 °C for the carboxyl group, 300 °C for the ester group, 380 °C for the carbonyl group, and 500 °C for the hydroxyl group.

The present invention further comprises the application of the carbon-based functional material which is applied to the field of agriculture or environment. The agricultural field comprises field crops and cash crops. The field crops at least comprise rice, corn, wheat and potatoes, and of course, further comprise others such as soybeans, peanuts, maize, and sorghum.

The cash crops at least comprise tobacco, vegetables, flowers and fruit trees, and further comprise medical materials, beets, sugar cane and the like.

The application of carbon-based functional materials in the field of agriculture at least comprises: directly applying the carbon-based functional material to the soil, or adding the carbon-based functional material to a fertilizer and then applying the fertilizer to the soil through flushing, drip irrigation or sprinkling irrigation.

The carbon-based functional material provided by the present invention can interact with plants, microorganisms, soil environments, and the like, has a function of inducing or regulating biosynthesis and a metabolic pathway, can be used as a carrier for biocatalytic synthesis and an intermediate material for biosynthesis, and can be directly applied to agriculture and environment as a plant enzyme activating agent and catalyst, a chemical fertilizer additive, a microorganism culturing composition, a soil conditioner, or a soil heavy metal collection agent.

The mechanism of the present invention is described as follows. With the *sp²* carbons as the skeleton base of the carbon-based functional material, the structure of the material is relatively stable. Meanwhile, the carbon-based functional material has the properties of ion adsorption and electron storage, such that after being released into the soil environment, the carbon-based functional material will compete with soil colloids for nutrients to adsorb the nutrients fixed in the soil. Moreover, due to the small particle size, the carbon-based functional material can be moved to surround the plant root system by diffusion or under the influence of the plant rhizosphere power, so as to change the soil and the soil nutrient distribution. The functional groups modified by the surface and the edges of the carbon skeleton are in an excited state, and can interact with the plant root system and the root-related enzymes to achieve the following effects: hydrogen ions released by the carbon-based functional material change the hydrogen ion concentration gradients inside and outside the root cells to promote absorption of the nutrients by the plants; the plants can selectively assimilate the functional groups of the carbon-based functional material to be an intermediate product which is used in a root system synthesis pathway or affects a metabolic pathway; and for rhizosphere flora, the ratio of carbon to nitrogen in the rhizosphere is regulated since the R functional groups of the carbon functional material are active, which is conducive to the development and proliferation of the rhizosphere flora.

Therefore, the carbon-based functional material released into the soil, plants, and the nutrient environments can interact with the soil, the plants, and the nutrients through factors such as environmental pH changes, ion adsorption, and water content in soil, so as to be released into organisms and the environment as degradable small molecules or an inducing signal. The carbon-based functional material has the functions of regulating a soil structure, adsorbing soil nutrients, and inducing plant growth and development, such that effects of soil restoration, sustained release of the nutrients and the plant growth increase are realized.

### Embodiment 1

The components of the obtained carbon-based functional material were analyzed, and the structure and the properties thereof were characterized. The results are discussed as follows.

By analyzing the components of the carbon-based functional material, there are 40-75% of carbon, 1-4% of hydrogen and 21-59% of oxygen in percentage by mass. Further, by observing the carbon skeleton base of the prepared carbon-based functional material (see Figure 1) through the transmission electron microscopy (TEM), it is clear that the carbon-based functional material is in the range of 1-100 nm.

Further, by characterizing the R functional groups through the infrared spectroscopy (see Figure 2), the corresponding functional groups are listed in the following table:

| No. | Wavelength | Functional Group |
|---|---|---|
| 1 | 3504 | associated hydroxyl group -OH |
| 2 | 3025 | carbon skeleton -C=C- |
| 3 | 2884 | stretching vibration of -CH, possibly, of alkyl group -CH₃, -CH₂-, and -CH- of an or aldehyde group -CHO |
| 4 | 2700-2500 | stretching and deformation vibration of -OH and C-O of carboxylic acid |
| 5 | 1968 | carbon skeleton -C=C=C- |
| 6 | 1700 | carbonyl group -C=O |
| 7 | 1451 | -C-O, -C-N |
| 8 | 1360 | out-of-plane rocking absorption of CH₂ of carboxylic acid |
| 9 | 1241 | vibration of C-O-C of an epoxy group, possibly, of an ester group |
| 10 | 955-915 | broad peak of -COOH of carboxylic acid |
| 11 | 921, 863 | stretching vibration of -C-O-C of an epoxy group |
| 12 | 593 | vibration of hydroxyl group -OH |

Samples of three carbon-based functional materials with different contents of carbon, hydrogen and oxygen were taken. In the first sample, the mass percentages of the carbon atom, the hydrogen atom and the oxygen atom were 67.67%, 3.61%, and 28.72%, respectively; in the second sample, the mass percentages of the carbon atom, the hydrogen atom and the oxygen atom were 53.01%, 2.59% and 44.40%, respectively; and in the third sample, the mass percentages of the carbon atom, the hydrogen atom and the oxygen atom were 48.86%, 3.91%, and 47.23%, respectively. 3 g of each sample was weighed and dispersed in 1 L of water to obtain three kinds of uniform hydrosols. The pH value and the conductivity of each hydrosol in a 100 ml system were measured to obtain the results shown in Figure 5. The pH values were 2.64, 2.42 and 2.13, respectively, and the conductivities were 1709 us/cm, 2019 us/cm and 2348 us/cm, respectively.

### Embodiment 2

The model plant Arabidopsis is taken as an example (see Figure 6). The left side is a control sample and the right side is an example with the added FCN to illustrate the effect on Arabidopsis after the addition of the carbon-based functional material.
1) The used carbon-based functional material comprised 48.86% of carbon, 3.91 % of hydrogen and 47.23% of oxygen in percentage by mass, and had a pH value of 2.13, and conductivity of 2348 us/cm.
2) Arabidopsis transplanted seedlings were prepared; under a sterile condition, soaking Arabidopsis seeds in sterile deionized water, adding 20% of a sodium hypochlorite solution for sterilization for 3-8 minutes, rinsing with sterile water, and hill-seeding the seeds in a prepared solid medium, and culturing in a light incubator for later use.
3) MS and MS solid medium were prepared by adding the carbon-based functional material;(wherein the MS is a formula designed by Murashige and Skoog in 1962, and is used as the minimal medium for plant tissue culture and rapid propagation because of the wide application range), 13.2 mg/L of the carbon-based functional material was added based on the MS formula.
4) Transplanting was executed, selecting Arabidopsis transplanted seedlings with uniform growth and 4 leaves to be transplanted into the MS and the MS solid medium with the carbon-based functional material added, and culturing vertically, wherein, for set parameters of a light incubator, the temperature was 22-24 °C, the light dark cycle ratio was 16:8, and the humidity was 60-70%.
5) Cultivation was performed for 30 days.

The application effects of the carbon-based functional material on Arabidopsis are described from the perspective of plant morphology, physiology, nutrition and cytology.
(1) With respect to the morphological application effect, responding to the FCN treatment, the Arabidopsis plant grew vigorously, and had a developed root system, and the average fresh weight of each plant was 4.1 times than that of the control sample; meanwhile, the growth and development speed of Arabidopsis was increased, characterized in numerous roots, the developed root system, and an increased diameter of the root system; and the average growth rate of the new root was 2.8 times than that of the control sample.
(2) With respect to the physiological application effect, after the FCN treatment, the synthesis speed of the auxin in Arabidopsis was increased, and was 1.5 times than that of the control sample.
(3) With respect to the nutrient application effect, after the FCN treatment, the amounts of macro, medium and micro elements in the Arabidopsis plant were changed variously. Taking potassium as an example, the absorption of potassium was increased by 8%.
(4) With respect to the application effect on cells, when observing the changes of mitochondria and chloroplasts in the leaf surface cells of Arabidopsis, it was found that the number of mitochondria was increased, assimilation products synthesized by the chloroplast did not accumulate, and the source and the sink were coordinated.

It can be seen that the FCN achieves the design goals in the agricultural applications, which are reflected in the following aspects.
1) The FCN regulates the existence form of nutrients necessary for plant growth, which is manifested by a developed root system and vigorous growth of the plant.
2) The FCN can be used as an intermediate for plant anabolism, and it is proved that carbon absorption is increased by supplying carbon assimilation products to the root system.
3) The FCN induces plant synthesis, which is manifested by changes in hormone contents.

### Embodiment 3

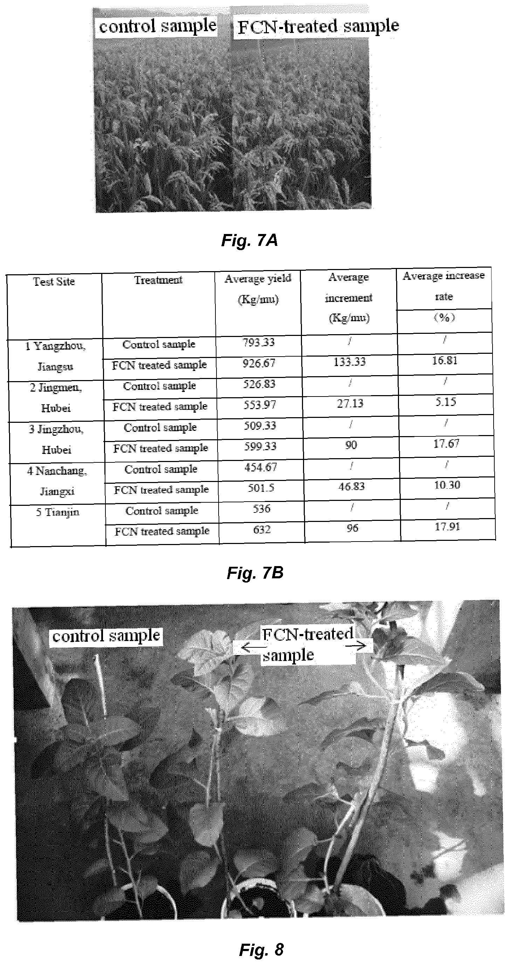

Rice grown in the field is taken as an example (see Figs. 7A and 7B) to illustrate the effect of the FCN on the rice.

First, FCNs were prepared. In this embodiment, five samples were prepared, and the sample parameters are listed in the following table:

| No. | FCN | Mass Percentage of Element | | | pH | Conductivity us/cm | Distributed Test Site | Comment |
|---|---|---|---|---|---|---|---|---|
| | | C% | H% | O% | | | | |
| 1 | Sample 1 | 46.44 | 3.95 | 49.61 | 2.28 | 2213 | Yangzhou, Jiangsu | |
| 2 | Sample 2 | 70.37 | 2.07 | 27.56 | 3.85 | 1521 | Jingmen, Hubei | |
| 3 | Sample 3 | 46.98 | 3.27 | 50.08 | 2.11 | 2478 | Jingzhou, Hubei | |
| 4 | Sample 4 | 63.19 | 2.56 | 34.25 | 3.06 | 1689 | Nanchang, Jiangxi | |
| 5 | Sample 5 | 42.54 | 3.93 | 53.53 | 2.09 | 2874 | Tianjin | |

Second, rice tests were executed, wherein regions, cultivation mode - fertilization amount, and adding manners of the FCNs are shown in the following table:

| No. | Test Site | Cultivation Mode - Fertilization Amount | Amount and Adding Manner of FCN | Number of Times |
|---|---|---|---|---|
| 1 | Yangzhou, Jiangsu | 16 kg of pure nitrogen, 20 kg of P₂O₅, and 6.7 kg of K₂O were applied to each mu (=0.0667 hectares) of the rice field. | 25 L of the FCN hydrosol was flushed into each mu of the rice field in a water and fertilizer coupling manner. | The fertilization was made 3 times, that is, a base fertilizer, a tiller fertilizer, and a flower-promoting and flower-protecting fertilizer, which were applied in a water and fertilizer coupling manner. |
| 2 | Jingmen, Hubei | 14 kg of pure nitrogen, 8 kg of P₂O₅ and 10 kg of K₂O were applied to each mu of the rice field. | 150-200 g/mu, mixed with fertilizer and to be broadcasted to the rice field. | The fertilization was made once, and the fertilizer was applied at the tillering stage. |
| 3 | Jingzhou, Hubei | 14 kg of pure nitrogen, 8 kg of P₂O₅ and 10 kg of K₂O were applied to each mu of the rice field. | 150-200 g/mu, mixed with fertilizer and to be broadcasted to the rice field. | The fertilization was made 3 times, and the fertilizer was applied at the tillering stage, the booting stage and the filling stage. |
| 4 | Nanchang, Jiangxi | For base fertilizer, each mu of the rice field was applied with 13.04 kg of urea, 37.5 kg of phosphate fertilizer and 5 kg of potassium chloride, for tiller fertilizer, each mu was applied with 7.83 kg of urea and 5 kg of potassium chloride, and for panicle fertilizer, each mu was applied with 5.22 kg of urea. | 50-100 g/mu, put, together with fertilizer, into a tank and applied to the rice field through drip irrigation under the film. | The fertilization was made 3 times, and the fertilizer was applied at the tillering stage, the booting stage and the filling stage. |
| 5 | Tianjin | 16 kg of pure nitrogen, 8 kg of P₂O₅ and 10 kg of K₂O were applied to each mu of the rice field. | 50 L of the FCN hydrosol was flushed into each mu of the rice field. | The fertilization was made 5 times, that is, 2.5 Kg of pure nitrogen was flushed into each mu of the rice field twice, and the FCN was directly flushed into the rice field 3 times to restore the saline-alkali soil. |

Other cultivation management operations were carried out in accordance with the rice cultivation in the test sites so as to illustrate the use effect of the FCN from the yield of rice.
1) With the FCN, the yield per mu of rice in the above five regions was increased by 5.15-17.91%, and a maximum increment was 133.33 Kg per mu, which has typical demonstration significance of increasing production. Tianjin is a typical single cropping rice planting region; Yangzhou (Jiangsu), Jingmen and Jingzhou (Hubei), as well as Nanchang (Jiangxi) are typical double cropping rice planting regions.
2) The FCN increased the fertilizer utilization rate, which is manifested by an increased absorption and utilization rate of the fertilizer and an increased utilization rate of grain production.
3) The FCN promoted the growth of rice, which is, during various growth stages of rice, manifested by an increased dry matter accumulation and leaf area index, an improved root oxidation activity and net photosynthetic efficiency of flag leaves, and an increased synthesizing level of zeatin and zeatin nucleosides.
4) As a soil conditioner, the FCN regulated the soil structure of saline-alkaline rice fields, which is manifested by a reduced pH value of the soil within a certain period of time, and a reduced electrical conductivity in the plough layer, such that the growth of rice and the rice root system are promoted.

It can be seen that the FCN achieves the design goals in the agricultural applications, which are reflected in the following aspects.
1) The FCN regulates the existence form of nutrients necessary for plant growth, which is manifested by a developed root system and vigorous growth of the plant.
2) The FCN can be used as an intermediate for plant anabolism, and it is proved that carbon absorption is increased by supplying carbon assimilation products to the root system.
3) The FCN induces plant synthesis, which is manifested by changes in hormone contents.
4) The FCN interacts with soil to restore the saline-alkali soil to the level that can be used by plants.

### Embodiment 4

A model plant, namely, typical cash crop tobacco, is taken as an example (see Figure 8) to illustrate the application effect on tobacco quality after the addition of the FCN.
1) The FCN used comprised 53.01% of carbon, 2.59% of hydrogen and 44.40% of oxygen in percentage by mass, and had a pH value of 2.42 and conductivity of 2019 us/cm.
2) Under a vermiculite plant condition, potting was adopted; the 14-14-30 high-potassium compound fertilizer was used, was supplemented by 10 g every 5 days, and was dissolved into 1 L water; 5 ml of the FCN was added into water each time; and pH value was adjusted to 6.5.
3) The growth of tobacco was observed; the upper 5 fully spread leaves were collected 40 days, 90 days, 110 days, 120 days and 130 days after transplant; and the absorption amounts of potassium were measured by ICP. The absorption amounts are shown in the following table:

| Potassium Content (%) | Days After Transplant | | | | |
|---|---|---|---|---|---|
| | 40 days | 90 days | 110 days | 120 days | 130 days |
| Control example | 2.49 | 1.52 | 1.13 | 2.98 | 0.79 |
| Treated example | 4.32 | 2.11 | 1.98 | 3.34 | 1.59 |

The above table shows that after adding the FCN, the K (potassium) content of the upper tobacco leaves is improved, such that the quality of the tobacco leaves can be improved. It can be seen that the FCN improves the absorption of potassium by tobacco, which is manifested by an increased absorption amount.

### Embodiment 5

Under extensive conditions, the application effects of the FCN on the yield increase of vegetables, the yield increase and the quality improvement of fruit trees, and improvement of flowers are further illustrated.
1) The FCN was prepared, wherein the FCN comprised 48.29% of carbon, 3.01% of hydrogen and 48.70% of oxygen in percentage by mass, and had a pH value of 2.17, and conductivity of 2542 us/cm.
2) Under the field condition, topdressing was applied twice, wherein 10 Kg/mu of nitrogen fertilizer was added each time, and 25 g of the FCN was applied each time. Compared with the control sample without the FCN, the yield per mu of radish was increased by 40%. The average length of the radish roots was 38 cm and the longest root was 78 cm. This indicates that the FCN increases the absorption of nutrients by radish, and increases the yield of radish.
3) 10 L of the FCN was applied to the rhizosphere of each kiwifruit tree. Compared with a kiwifruit tree without using the FCN, the annual fruiting rate was increased, kiwi fruits were uniform, the sweetness and the taste of the fruits were improved, and the shelf lives of the fruits were prolonged.
4) FCN mixed in water was drip-irrigated to flower maranta arundinacea. Compared with the control maranta arundinacea sample, the maranta arundinacea using the FCN is compact in shape, vigorous in growth, and bright in flower color, and can reach its commercial requirement 7-10 days in advance.

The practical applications of the FCN provided by the present invention in agricultural planting are described as follows. After the addition of the FCN, the phytomass of the crop is increased by more than 5%, and the stress resistance of the crop and the quality of the agricultural product are improved. After adding the FCN into the fertilizer, the utilization efficiency of the fertilizer is increased by more than 30%, and the agricultural product yield rate of the fertilizer is increased. After adding the FCN into the soil, the soil flora is activated, the proliferation rate of the microorganisms is increased, and the content of active nutrients in the soil is increased.

## Claims

1. A carbon-based functional material, consisting of three elements: carbon, hydrogen and oxygen, wherein a structure of the carbon-based functional material is composed of *sp²* carbons as a skeleton, and an R functional group is formed on a surface and/or at an edge of a base of the carbon skeleton; wherein
the size of the carbon skeleton is 1-100 nm; and
the R functional group comprises one or a combination of at least two of a hydroxyl group, a carboxyl group, an ether bond, an epoxy group, a carbonyl group, an aldehyde group, an ester group, and an alkyl group.

2. The carbon-based functional material of claim 1, wherein the proportion of the three elements of carbon, hydrogen and oxygen are: 40-75 wt% of carbon, 1-4 wt% of hydrogen and 21-59 wt% of oxygen.

3. The carbon-based functional material of claim 1, wherein the carbon-based functional material has a hydrophilic property, and forms a uniform carbon-based functional material hydrosol with water.

4. The carbon-based functional material of claim 3, wherein the carbon-based functional material hydrosol has a pH value in a range of 2-4 and conductivity greater than 1.5 ms/cm.

5. The carbon-based functional material of any of claims 1-4, wherein a raw material for preparing the carbon-based functional material is inorganic, and the carbon-based functional material is formed by a single step under a simulated natural environmental condition; and the combination of the R functional group changes along with the change of natural condition.

6. An application of a carbon-based functional material, comprising the carbon-based functional material of any of claims 1-5, wherein the carbon-based functional material is used in the agricultural field or the environmental field, interacts with plants, microorganisms and soil environment, and has a function of inducing or regulating biosynthesis and metabolic pathway.

7. The application of the carbon-based functional material of claim 6, wherein the agricultural field comprises field crops and cash crops.

8. The application of the carbon-based functional material of claim 7, wherein the field crops at least comprise rice, corn, wheat, and potatoes.

9. The application of the carbon-based functional material of claim 7, wherein the cash crops at least comprise tobacco, vegetables, flowers, and fruit trees.

10. The application of the carbon-based functional material of claim 6, wherein the application of the carbon-based functional material in the agriculture field at least comprises: directly applying the carbon-based functional material to soil, or adding the carbon-based functional material to a fertilizer and then applying the fertilizer to the soil through flushing, drip irrigation or sprinkling irrigation.
